(19) Europäisches Patentamt
European Patent Office
Office européen des brevets

(11) Veröffentlichungsnummer: 0 001 468
B1

(12) **EUROPÄISCHE PATENTSCHRIFT**

(45) Veröffentlichungstag der Patentschrift: **12.05.82**

(51) Int. Cl.³: C 09 D 3/72, C 08 G 18/80

(21) Anmeldenummer: **78200220.8**

(22) Anmeldetag: **02.10.78**

(54) **Pulverförmige Überzugsmittel, Verfahren zu deren Herstellung und deren Anwendung.**

(30) Priorität: **05.10.77 DE 2744721**

(43) Veröffentlichungstag der Anmeldung: **18.04.79 Patentblatt 79/8**

(45) Bekanntmachung des Hinweises auf die Patenterteilung: **12.05.82 Patentblatt 82/19**

(84) Benannte Vertragsstaaten: **BE DE FR GB LU NL**

(56) Entgegenhaltungen: **keine**

(73) Patentinhaber: **CHEMISCHE WERKE HÜLS AG, Postfach 1320, D-4370 Marl 1 (DE)**

(72) Erfinder: **Wolf, Elmar, Dr., Am Böckenbusch 3a, D-4690 Herne 2 (DE)**
Erfinder: **Obendorf, Johann, Dr., Pastorsbusch 40, D-4270 Dorsten (DE)**
Erfinder: **Gras, Rainer, Dr., An der Ziegelei 91, D-4690 Herne 2 (DE)**

(74) Vertreter: **Steil, Hanna, Dipl.-Chem., RSP PATENTE-PB 40 Holsterhauser Strasse 160 Postfach 2840, D-4690 Herne 2 (DE)**

**EP 0 001 468 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Pulverförmige Überzugsmittel, Verfahren zu deren Herstellung und deren Anwendung

## Beschreibung und Beispiele

Pulverisierbare Polyepoxide waren die ersten Bindemittel, die als Rohstoffe für Pulverlacke größeres Interesse fanden. Erst 1965 wurden zum ersten Mal Phenol-verkappte Polyisocyanate als neue Ausgangsprodukte für Pulverlacke in der DL-PS 55 820 beschrieben. Pulverförmige Mischungen aus hochschmelzenden hydroxylgruppenhaltigen Polyestern und Polyisocyanaten, deren Isocyanatgruppen durch Phenol verkappt sind, lassen sich durch elektrostatisches Spritzen oder Besprühen auf Substrate aufbringen und nachfolgend durch Erhitzen zu Überzügen aushärten. Die Nachteile dieses Verfahrens sind durch die Phenolabspaltung bedingt: starke Geruchsbelästigung, Verlaufstörungen, insbesondere durch Blasenbildung.

Gemäß der Lehre der DE-A-1 957 483 lassen sich diese Nachteile vermeiden, wenn man ε-Caprolactam-verkappte Polyisocyanate anstelle der vorher erwähnten Phenol-verkappten Verbindungen verwendet.

Für manche Anwendungsgebiete ist allerdings die Reaktivität dieser in der DE-A-1 957 483 beschriebenen Systeme aus ε-Caprolactam-verkappten, aliphatischen Diisocyanaten und hydroxylgruppenhaltigen Polyestern, selbst in Gegenwart von Katalysatoren, nicht hinreichend.

Es wurden nun neue blockierte Polyisocyanate gefunden, die in überraschender Weise die wichtigsten vorteilhaften Eigenschaften der oben angeführten Härtungsmittel in sich vereinigen, ohne deren Nachteile zu besitzen.

Gegenstand der Erfindung sind pulverförmige Überzugsmittel mit hoher Lagerstabilität und einer Korngröße kleiner als 250 µm mit einem Maximum der Korngrößenverteilung zwischen 20 und 60 µm, auf der Grundlage von zwischen 40 bis 120°C schmelzenden hydroxylgruppenhaltigen Polyestern, blockierten Polyisocyanaten und gegebenenfalls Katalysatoren sowie üblichen Lackzusätzen, die dadurch gekennzeichnet sind, daß sie als blockierte Polyisocyanate mit Imidazolinen der allgemeinen Formel

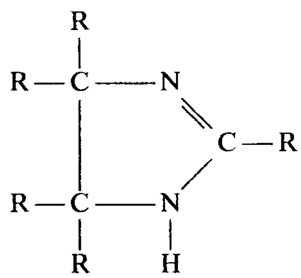

blockierte Polyisocyanate enthalten, worin R gleiche oder verschiedene Substituenten aus der Gruppe Wasserstoff, Alkyl-, Cycloalkyl-, Aralkyl- und ggf. alkylsubstituierter Arylrest sind. Hydroxylgruppenhaltige Polyester und blockierte Polyisocyanate sind in den pulverförmigen Überzugsmitteln in solchen Mengen enthalten, daß auf 1 Hydroxylgruppenäquivalent 0,9—1,1 NCO-Gruppenäquivalente kommen. Die erfindungsgemäßen blockierten Polyisocyanate sind mit den meisten festen Polyestern gut verträglich und liefern bei erhöhten Temperaturen (80—120°C) homogene Schmelzen, die sehr gut zur Herstellung von Sinterpulvern geeignet sind. Die erfindungsgemäßen härtbaren Gemische sind bei Zimmertemperatur sehr gut lagerstabil, d. h. sie verändern sich weder physikalisch (kein Zusammenklumpen) noch chemisch, d. h. die Bestandteile der Überzugsmittel reagieren bei Raumtemperaturen nicht. Die Aushärtungszeiten liegen im Temperaturintervall von 140—200°C innerhalb von 20—4 Minuten. Der Härtungsmechanismus ist mutmaßlich komplex. Es erfolgt bei der Härtung eine Deblockierung der Härter in die Imidazoline und die Polyisocyanate. Die freigewordenen NCO-Gruppen reagieren mit den OH-Gruppen des Polyesters über eine NCO/OH-Reaktion unter Ausbildung von Urethanbindungen. Die gehärteten Überzüge bzw. Beschichtungen zeichnen sich durch sehr gute chemische und mechanische Eigenschaften sowie Chemikalienbeständigkeit aus.

Die erfindungsgemäß eingesetzten, unterhalb 40°C festen und zwischen 40 und 120°C schmelzenden, hydroxylgruppenhaltigen Polyester können aus aliphatischen, cycloaliphatischen und/oder aromatischen Polycarbonsäuren aufgebaut sein.

Geeignete aliphatische, cycloaliphatische und aromatische Polycarbonsäuren sind, wobei die aromatischen ein- oder mehrkernig sein können, z. B. Oxalsäure, Bernsteinsäure, Glutarsäure, 2,2-Dimethylglutarsäure, Adipinsäure, 2,2,4- bzw. 2,4,4-Trimethyladipinsäure, Sebacinsäure, Dodecandicarbonsäure, Terephthalsäure, Methylterephthalsäure, 2,5- und 2,6-Dimethylterephthalsäure, Chlorterephthalsäure, 2,5-Dichlorterephthalsäure, Fluorterephthalsäure, Isophthalsäure, Trimellithsäure, Naphthalindicarbonsäure, insbesondere die 1,4-, 1,5-, 2,6- und 2,7-Isomeren, Phenylen-1,4-diessigsäure, 4-Carboxyphenoxyessigsäure, m- und p-Terphenyl-4,4″-dicarbonsäure, Dodecahydrodiphensäure, Hexahydroterephthalsäure, 4,4'-Diphensäure, 2,2'- und 3,3'-Dimethyl-4,4'-diphensäure, 2,2'-Dibrom-4,4'-diphensäure, Bis-(4-carboxyphenyl)-methan, 1,1- und 1,2-Bis-(4-carboxyphenyl)-äthan, 2,2-Bis-(4-carboxyphenyl)-propan, 1,2-Bis-(4-carboxyphenoxy)-äthan, Bis-4-carboxyphenyl-äther, Bis-4-carboxyphenylsulfid, Bis-4-carboxyphenylketon, Bis-4-carboxyphenylsulfoxid, Bis-4-carboxylphenylsulfon, 2,8-Dibenzofurandicarbonsäure, 4,4'-Stilbendicarbonsäure und Octadecahydro-m-terphenyl-4,4''-dicarbonsäure u. a. Selbstverständlich können anstelle der genannten Säuren auch deren funktionelle Derivate, wie Anhydride, Ester u. a. eingesetzt werden. Es können auch Mischungen der vorgenannten Verbindungen verwendet werden.

Zur Herstellung der hydroxylgruppenhaltigen Polyester werden als Alkoholkomponente bevorzugt Diole verwendet. Die teilweise Mitverwendung von anderen Polyolen, z. B. Triolen, ist möglich; Beispiele für geeignete Verbindungen sind: Äthylenglykol, Propylenglykol, wie 1,2- und 1,3-Propandiol, 2,2-Dimethylpropandiol-(1,3), Butandiole, wie Butandiol-(1,3) bzw. (1,4), Hexandiole, z. B. Hexandiol-(1,6), 2,2,4-Trimethylhexandiol-(1,6), 2,4,4-Trimethylhexandiol-(1,6), Heptandiol-(1,7), Thiodiglykol, Octadecandiol-(1,18), 2,4-Dimethyl-2-propylheptandiol-(1,3), Buten- oder Butindiol-(1,4), Diäthylenglykol, Triäthylenglykol, cis- und trans-1,4-Cyclohexandimethanol, 1,4-Cyclohexandiole, 2,2-Bis-(4-hydroxycyclohexyl)-propan, bisoxyäthyliertes 2,2-Bis-(4-hydroxyphenyl)-propan, Glycerin, Hexantriol-(1,2,6), 1,1,1-Trimethylolpropan, 1,1,1-Trimethyloläthan, Pentaerythrit, u. a. Es können auch Mischungen der vorgenannten Verbindungen verwendet werden.

Bei der Herstellung der Polyester wird das Polyol in solchen Mengen eingesetzt, daß auf 1 Carboxylgruppenäquivalent mehr als 1 OH-Gruppenäquivalent kommen, so daß Polyester mit Hydroxylzahlen zwischen 40 und 240, vorzugsweise zwischen 40 und 150, erhalten werden.

Die hydroxylgruppenhaltigen Polyester können in bekannter und üblicher Weise hergestellt werden. Dazu bieten sich insbesondere die beiden nachstehenden Verfahren an.

Im ersten Fall geht man beispielsweise von mineralsäurefreier Terephthalsäure aus, die gegebenenfalls durch Umkristallisation zu reinigen ist. Das Verhältnis der Äquivalente von Säuren zu Alkohol richtet sich naturgemäß nach der gewünschten Molekülgröße und nach der zu erstellenden OH-Zahl. Die Reaktionskomponenten werden nach Zugabe von 0,005—0,5 Gew.-% — vorzugsweise 0,05—0,2 Gew.-% — eines Katalysators, z. B. Zinnverbindungen, wie Di-n-butylzinnoxid, Di-n-butylzinndiester u. a., oder Titanester, insbesondere Tetraisopropyltitanat, in einer geeigneten Apparatur unter Durchleiten eines Inertgases, z. B. Stickstoff, erhitzt. Bei ca. 180°C kommt es zur ersten Wasserabspaltung. Das Wasser wird destillativ aus dem Reaktionsgemisch entfernt. Innerhalb von mehreren Stunden wird die Reaktionstemperatur bis auf 240°C erhöht. Das Reaktionsmedium bleibt bis kurz vor Ende der vollständigen Veresterung inhomogen. Nach ca. 24 h ist die Reaktion abgeschlossen.

Bei dem zweiten Verfahren geht man beispielsweise von Terephthalsäuredimethylester aus und estert unter Durchleiten eines Inertgases, z. B. Stickstoff, mit den gewünschten Alkoholkomponenten um. Als Umesterungskatalysatoren können wieder Titanester, Dialkylzinnester oder Di-n-butylzinnoxid in Konzentrationen von 0,005—0,5 Gew.-% eingesetzt werden. Nach dem Erreichen von ca. 120°C kommt es zur ersten Methanolabspaltung. Innerhalb von mehreren Stunden wird die Temperatur auf 220—230°C gesteigert. Je nach gewähltem Ansatz ist die Umesterung nach 2—24 h abgeschlossen.

Die Erweichungspunkte des Polyesters müssen in dem beschriebenen Bereich liegen, damit sie sich bei Temperaturen zwischen 70 und etwa 120°C mit den zur Herstellung der erfindungsgemäßen Überzugsmittel notwendigen Zusätzen verarbeiten lassen. Die Erweichungspunkte müssen andererseits aber so hoch liegen, daß die aus den Polyestern gewonnenen erfindungsgemäßen Überzugsmittel zu nicht klumpenden, frei fließenden Pulvern vermahlen werden können.

Die erfindungsgemäß verwendeten, mit Imidazolinen der beschriebenen allgemeinen Formel blockierten Polyisocyanate können durch Umsetzung bei Temperaturen von 0—150°C, vorzugsweise bei 80—120°C, hergestellt werden, wobei die Polyisocyanate und die Imidazoline in solchen Mengen eingesetzt werden, daß auf eine Isocyanatgruppe 0,5—1,1, vorzugsweise 0,8—1,0 Mol, Imidazolin kommen. Die angewendete Reaktionstemperatur sollte jedoch unterhalb der Aufspalttemperatur der Addukte liegen.

Die Umsetzung kann sowohl in Lösungsmitteln, in der Schmelze als auch in im Überschuß vorgelegtem Polyisocyanat durchgeführt werden.

Als Ausgangsverbindungen, die zur Blockierung mit den Imidazolinen eingesetzt werden können, eignen sich beispielsweise Polyisocyanate, insbesondere Diisocyanate, wie aliphatische, cycloaliphatische, araliphatische, d. h. arylsubstituierte aliphatische, und/oder aromatische Diisocyanate, wie sie beispielsweise in Houben-Weyl, Methoden der organischen Chemie, Band 14/2, S. 61—70, und dem Artikel von W. Siefken in Justus Liebigs Annalen der Chemie 562, 75—136, beschrieben werden, wie 1,2-Äthylendiisocyanat, 1,4-Tetramethylendiisocyanat, 1,6-Hexamethylendiisocyanat, 2,2,4- bzw. 2,4,4-Trimethyl-1,6-hexamethylendiisocyanat (TMDI), Dodecandiisocyanat-1,12, $\omega,\omega'$-Diisocyanatodipropyläther, Cyclobutan-1,3-diisocyanat, Cyclohexan-1,3- und 1,4-diisocyanat, 3-Isocyanatomethyl-3,5,5-trimethylcyclohexylisocyanat, welches auch als Isophorondiisocyanat bezeichnet und mit IPDI abgekürzt wird, Decahydro-8-methyl-(1,4-methano-naphthalin-2 (oder 3) 5-ylendimethylen-diisocyanat, Hexahydro-4,7-methano-indan-1 (oder 2) 5 (oder 6) ylendimethylen-diisocyanat, Hexahydro-4,7-methanoindan-1 (oder 2) 5 (oder 6) ylendiisocyanat, Hexahydro-1,3- bzw. 1,4-phenylen-diisocyanat,

2,4- und 2,6-Hexahydrotoluylendiisocyanat, Perhydro-2,4'- und/oder -4,4'-diphenyl-methan-diisocyanat, ω,ω'-Diisocyanato-1,4-diäthylbenzol, 1,4-Phenylendiisocyanat, 4,4'-Diisocyanato-diphenyl, 4,4'-Diisocyanato-3,3-dichlor-diphenyl, 4,4'-Diisocyanato-3,3'-dimethoxy-diphenyl, 4,4'-Diisocyanato-3,3'-dimethyl-diphenyl, 4,4'-Diisocyanato-3,3'-diphenyl-diphenyl, 4,4'-Diisocyanato-diphenylmethan, Naphthylen-1,5-diisocyanat, Toluylendiisocyanate, Toluylen-2,4- bzw. 2,6-diisocyanat, N,N'-(4,4'-Dimethyl-3,3'-diisocyanatodiphenyl)-uretdion, m-Xylylen-diisocyanat, aber auch die Triisocyanate, wie 2,4,4'-Triisocyanato-diphenyläther, 4,4',4''-Triisocyanato-triphenylmethan, Tris-(4-isocyanatophenyl)-thiophosphat, sowie beliebige Gemische dieser Verbindungen. Weitere geeignete Isocyanate werden in dem genannten Artikel in den Annalen auf Seite 122 f beschrieben.

Besonders bevorzugt werden in der Regel die technisch leicht zugängigen aliphatischen, cycloaliphatischen oder aromatischen Diisocyanate und besonders das 3-Isocyanatomethyl-3,5,5-trimethylcyclohexylisocyanat und 2,4-Toluylendiisocyanat sowie deren isomere Gemische.

Neben den monomeren Polyisocyanaten können als Ausgangsstoffe für die Blockierung mit den nachstehend ausführlich beschriebenen Imidazolinen selbstverständlich auch die dimeren und trimeren Formen der Polyisocyanate, wie Uretdionen, Biuret und Isocyanurate und Urethanaddukte eingesetzt werden, die nach bekannten Methoden herstellbar sind.

Unter Polyisocyanaten im Sinne der vorliegenden Erfindung werden auch solche verstanden, die vor der Blockierung mit den Imidazolinen einer Umsetzung zur Molekülvergrößerung mit den in der Isocyanatchemie gebräuchlichen sogenannten Kettenverlängerungsmitteln, wie Wasser, Polyolen, Polyaminen u. a., unterworfen wurden, wobei das bi- oder trifunktionelle Kettenverlängerungsmittel, also solche mit gegenüber Isocyanatgruppen reaktionsfähigen Gruppen, wie Hydroxyl- und/oder Aminogruppen tragende Verbindungen, in solchen Mengen verwendet wird, daß das resultierende neue Isocyanat im Durchschnitt mindestens 2 Isocyanatgruppen trägt. Bei Verwendung von Wasser als Kettenverlängerungsmittel resultieren Polyisocyanate mit einer oder mehreren Harnstoffgruppierungen.

Geeignete Polyole sind beispielsweise Diole und Triole, die auch zur Herstellung der hydroxylgruppenhaltigen Polyester verwendet werden können.

Von den für die Kettenverlängerung bzw. Molekülvergrößerung geeigneten Polyaminen sollen beispielsweise das Äthylendiamin-1,2, Propylendiamin-1,2 und -1,3, Butylendiamin-1,2, -1,3 und -1,4 sowie die Hexamethylendiamine, die eine oder mehrere $C_1-C_4$-Alkylreste sein können, wie 2,2,4- bzw. 2,4,4-Trimethylhexamethylendiamin-1,6 u. a., und 3-Aminomethyl-3,5,5-trimethylcyclohexylamin, welches auch als IPD bezeichnet wird, genannt werden.

Geeignete Imidazolin-Derivate im Sinne der vorliegenden Erfindung, die der früher beschriebenen allgemeinen Formel entsprechen, sind beispielsweise solche mit gegebenenfalls arylsubstituierten Alkylresten, mit gegebenenfalls alkylsubstituierten Arylresten, wie 2-Methylimidazolin, 2,4-Dimethylimidazolin, 2-Methyl-4-(n-butyl)-imidazolin, 2-Äthylimidazolin, 2-Äthyl-4-methyl-imidazolin, 2-Benzylimidazolin, 2-Phenyl-imidazolin, 2-Phenyl-4-methyl-imidazolin, 2-Phenyl-4-(N-morpholinylmethyl)-imidazolin, 2-(o-Tolyl)-imidazolin, 2-(p-Tolyl)-imidazolin, u. a. m. Es können auch Gemische der Imidazolin-Derivate erfindungsgemäß eingesetzt werden. Dieses ist besonders dann zweckmäßig, wenn blockierte Isocyanate mit niedrigen Schmelzpunkten bzw. -bereichen benötigt werden.

Die erfindungsgemäß einsetzbaren Imidazolin-Derivate können nach bekannten Verfahren aus gegebenenfalls substituierten Diaminen und aliphatischen oder aromatischen Mononitrilen in Gegenwart von elementarem Schwefel oder Sulfurylchlorid als Katalysator hergestellt werden.

Die Blockierung kann, wie bereits erwähnt, auch in Lösungsmitteln durchgeführt werden. Als Lösungsmittel für diese Reaktion kommen nur solche in Frage, die mit den Polyisocyanaten nicht reagieren, beispielsweise Ketone, wie Aceton, Methyläthylketon, Methylisobutylketon, Cyclopentanon, Cyclohexanon u. a.; Aromaten, wie Benzol, Toluol, Xylole, Chlorbenzol, Nitrobenzol u. a.; cyclische Äther, wie Tetrahydrofuran, Dioxan u. a.; Ester, wie Methylacetat, n-Butylacetat, u. a.; aliphatische Chlorkohlenwasserstoffe, wie Chloroform, Tetrachlorkohlenstoff u. a. sowie aprotische Lösungsmittel, wie Dimethylformamid, Dimethylacetamid, Dimethylsulfoxid usw.

Wenn das Blockierungsmittel im Verhältnis von $\geqq 1$ zur Anzahl der Isocyanatgruppen eingesetzt wird, werden die Reaktionsmischungen so lange bei den angegebenen Temperaturen gehalten, bis der NCO-Gehalt der Reaktionsmischung auf Werte unter 0,2% NCO abgesunken ist, für $<1$ bis zur Erreichung eines konstanten NCO-Wertes.

Ebenfalls erfindungsgemäß einsetzbar sind solche blockierten Polyisocyanate, die durch nachträgliche Umsetzung einer Gruppe von blockierten Polyisocyanaten erhalten werden können, nämlich solche, bei denen Imidazoline in unterstöchiometrischen Mengen eingesetzt worden sind, d. h. das Verhältnis Imidazolin zu Isocyanatgruppen war $<1:1$, mit den gleichen Kettenverlängerungsmitteln, die bereits früher als Mittel zur Molekülvergrößerung beschrieben worden sind. Die Umsetzung erfolgt ebenfalls bei Temperaturen im Bereich von 20–150°C, vorzugsweise 80–120°C, jedoch unterhalb der Deblockierungstemperatur des blockierten Polyisocyanats. Durch diese blockierten Polyisocyanate lassen sich Überzugsmittel herstellen, die in sehr weiten Grenzen praktische Erfordernisse abdecken. Diese Verfahrensvariante ist besonders von Interesse für Polyisocyanate mit unterschiedlich reaktiven NCO-Gruppen.

So lassen sich durch Wechsel der Reihenfolge Adduktbildung/Blockierung blockierte Polyisocyanate mit unterschiedlicher Reaktivität, Schmelzbereich und Struktur erhalten.

Bei Blockierung von Diisocyanaten und 2wertigen Kettenverlängerungsmitteln werden Verbindungen erhalten, die durch die nachstehende allgemeine Formel beschrieben werden können:

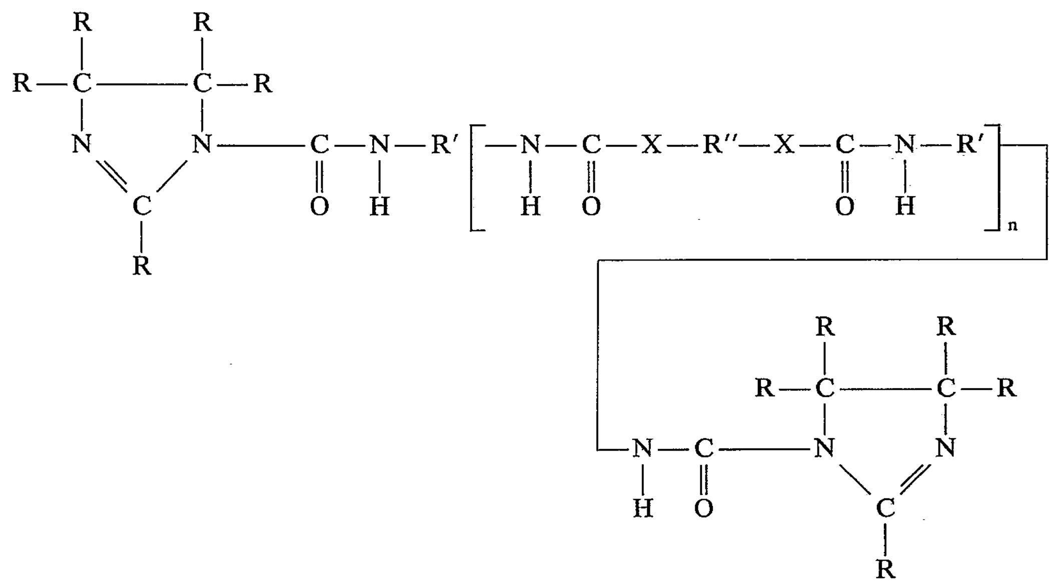

In der vorstehenden allgemeinen Formel bedeuten: n 0 oder 1, X O, S oder eine NH-Gruppe, R gleiche oder verschiedene Reste aus der Gruppe Wasserstoff, Alkyl-, Cycloalkyl-, Aralkyl- und ggf. alkylsubstituierter Arylrest, R′ Alkylen-, Cycloalkylen- oder Arylenreste und R″ einen gegebenenfalls durch eine oder mehrere Alkylreste, wobei mehrere auch Bestandteil eines cycloaliphatischen Ringes sein können, substituierten, gesättigten oder ungesättigten Alkylenrest mit 2–18 C-Atomen, der gegebenenfalls ein oder mehrere Sauerstoff- oder Schwefelatome in der Kohlenwasserstoffkette enthält, oder einen Cycloalkylenrest.

Zur Verbesserung der Verlaufeigenschaften der Lacke werden bei der Zubereitung sogenannte Verlaufmittel zugesetzt. Bei diesen Mitteln kann es sich um chemische Verbindungen bzw. deren Gemische sehr unterschiedlicher chemischer Art handeln, z. B. polymere oder monomere Verbindungen, Acetale, wie

Polyvinylformal, Polyvinylacetal, Polyvinylbutyral,
Polyvinylacetobutyral bzw.
Di-2-äthylhexyl-i-butyraldehyd-acetal,
Di-2-äthylhexyl-n-butyraldehyd-acetal,
Diäthyl-2-äthylhexanol-acetal,
Di-n-butyl-2-äthyl-hexanol-acetal,
Di-i-butyl-2-äthylhexanol-acetal,
Di-2-äthylhexyl-acetaldehyd-acetal u. a.,

Äther, wie die polymeren Polyäthylen- und Polypropylenglykole, Mischpolymerisate aus n-Butylacrylat und Vinylisobutyläther, Keton-Aldehyd-Kondensationsharze, feste Siliconharze oder auch Gemische von Zinkseifen, von Fettsäuren und aromatischen Carbonsäuren u. ä. Derartige Verlaufmittel können in den Ansätzen in Mengen von 0,2–5,0 Gew.-%, bezogen auf die Gesamtmenge des Pulverlackes, enthalten sein.

Die Umsetzung der hydroxylgruppenhaltigen Polyester mit den durch Deblockierung freigesetzten Polyisocyanaten kann durch Katalysatoren beschleunigt werden. Beispiele für geeignete Katalysatoren sind einmal organische Sulfonsäuren, p-Toluolsulfonsäure, zum anderen organische Zinnverbindungen, wie Di-n-butyl-zinndilaurat.

Die anderen Bestandteile des heißhärtbaren Pulverlackgemisches, wie Pigmente, Farbstoffe, Füllstoffe, Thixotropiermittel, UV- und Oxidationsstabilisatoren u. a. können, bezogen auf die Menge des festen Polyesters, innerhalb eines weiten Bereichs schwanken.

Weiterer Gegenstand der Erfindung ist ein Verfahren zur Herstellung der pulverförmigen Überzugsmittel, in dem man die festen hydroxylgruppenhaltigen Polyester und die blockierten Polyisocyanate, gegebenenfalls nach Zugabe der genannten Lackzusätze, in den genannten Mengenverhältnissen mischt und bei erhöhter Temperatur, bei der Polyester und blockiertes Polyisocyanat geschmolzen vorliegen, aber mindestens 30° C unterhalb der Aufspalttemperatur des blockierten Polyisocyanats extrudiert, abkühlt und anschließend auf eine Korngröße kleiner als

250 µm, vorzugsweise <100 µm, und ein Maximum der Korngrößenverteilung zwischen 20 und 60 µm, vorzugsweise zwischen 30 und 50 µm, mahlt und gegebenenfalls die gröbere Fraktion durch Siebung entfernt.

Die Aufbringung des Pulverlackes auf die zu überziehenden Körper kann nach bekannten Methoden, z. B. elektrostatisches Pulverspritzen, Wirbelsintern, elektrostatisches Wirbelsintern etc., geschehen. Nach dem Aufbringen des Pulverlackes nach einer der beschriebenen Methoden auf die zu lackierenden Gegenstände werden sie zur Aushärtung auf Temperaturen oberhalb der Aufspalttemperatur des Härtungsmittels, d. h. 140–200°C, vorzugsweise 150–180°C, erhitzt. Danach besitzt der resultierende Überzug die beschriebenen Vorteile.

Zur Beschichtung mit den erfindungsgemäßen pulverförmigen Überzugsmitteln eignen sich alle Substrate, die die angegebenen Härtungstemperaturen ohne Einbuße der mechanischen Eigenschaften vertragen, wie Metallflächen, Glasflächen u. ä.

Die erfindungsgemäßen pulverförmigen Überzugsmittel und deren Anwendung werden durch die nachstehenden Beispiele illustriert:

## Beispiel 1

1a. Blockierte Isocyanatkomponente

Zu 444 Gew.-Teilen IPDI wurden bei 80°C unter guter Rührung 106 Gew.-Teile Diäthylenglykol langsam zugegeben. Nach erfolgter Diäthylenglykolzugabe wurde noch 2 h bei 80°C erhitzt. Der NCO-Gehalt des IPDI/Diäthylenglykol-Addukts betrug dann 15,1%.

1b. Zu 556 Gew.-Teilen des gemäß 1a hergestellten Addukts aus 2 Molen IPDI und 1 Mol Diäthylenglykol wurden bei 120°C portionsweise 292 Gew.-Teile 2-Phenylimidazolin so zugegeben, daß die Temperatur nicht über 120°C anstieg. Nach Beendigung der 2-Phenylimidazolinzugabe wurde das Reaktionsgemisch noch 1 h bei 120°C erhitzt. Das Reaktionsprodukt ist ein blaßgelbes Pulver mit einem Schmelzbereich von 100–106°C, einer Glasumwandlungstemperatur (DTA) von 70–90°C und besitzt eine Aufspalttemperatur von etwa 140°C.

1c. Polyester

9 Mol (1746 g) Dimethylterephthalat, 4 Mol (416 g) 2,2-Dimethylpropandiol-1,3, 3,75 Mol (540 g) 1,4-Dimethylolcyclohexan und 2,5 Mol (335 g) Trimethylolpropan wurden in einem 5-l-Glaskolben zusammengegeben und mit Hilfe eines Ölbades erwärmt. Nachdem die Substanzen zum größten Teil aufgeschmolzen waren, wurde bei einer Temperatur von 160°C 0,05 Gew.-% Di-n-butylzinnoxid als Veresterungskatalysator zugesetzt und die Temperatur des Bades erhöht. Die erste Methanolabspaltung trat bei ca. 170°C Sumpftemperatur auf.

Die Umesterung war nach ca. 14 h abgeschlossen, wobei bei einer maximalen Temperatur in der Schlußphase von 220°C umgeestert wurde.

Nach der Vakuumbehandlung (bei 1 mm Hg) zur Entfernung der flüchtigen Bestandteile und dem Abkühlen wurden die folgenden chemischen und physikalischen Daten ermittelt:

| | |
|---|---|
| OH-Zahl | 100–105 mg KOH/g |
| Säurezahl | <1 mg KOH/g |
| Schmelzbereich (nach Kofler) | 78–85°C |
| Glasumwandlungstemperatur (DTA) | 38–55°C |
| Viskosität (bei 160°C) | ca. 15 000 cSt. |

1d. Klarlack

55,5 Gew.-Teile des Polyesters gemäß 1c wurden mit 42 Gew.-Teilen des blockierten Isocyanats gemäß 1b und 0,7 Gew.-Teilen Silikonöl in der Schmelze bei Temperaturen von 120–130°C extrudiert. Nach dem Erkalten wurde das homogene Gemisch gebrochen und anschließend mit einer Stiftmühle auf eine Korngröße von <100 µm gemahlen. Das so hergestellte Klarlack-Pulver wurde mit einer elektrischen Pulverspritzanlage bei 60 kV auf entfettete Eisenbleche appliziert und in einem Umlufttrockenschrank bei Temperaturen zwischen 160–180°C eingebrannt. Bei Temperaturen >180°C sind natürlich die Härtungszeiten dementsprechend kürzer.

| Einbrennbedingungen | Mechanische Daten | | | | |
|---|---|---|---|---|---|
| Zeit/Temperatur | SD | HK | ET | GS | KS indirekt |
| 25′ 160 | 30–45 | >200 | 9 | 0 | >94 |
| 20′ 170 | 30–50 | >200 | 8,8 | 0 | >94 |
| 15′ 180 | 30–50 | >200 | 8–9 | 0 | >94 |

Beispiel 2

2a. Blockierte Isocyanatkomponente

Zu einer Mischung aus 222 Gew.-Teilen Isophorondiisocyanat (IPDI) und 300 Gew.-Teilen wasserfreiem Aceton wurden bei Raumtemperatur langsam 292 Gew.-Teile 2-Phenyl-imidazolin, die in 500 Gew.-Teilen wasserfreiem Aceton gelöst waren, zugetropft. Nach Beendigung der 2-Phenylimidazolin-Zugabe wurde 1 h bei 50° C erhitzt. Das Aceton wurde abdestilliert. Die letzten Reste an Aceton wurden durch Trocknung des Reaktionsprodukts bei 60° C im Vakuumtrockenschrank erhitzt. Das mit 2-Phenylimidazolin blockierte IPDI ist ein weißes Pulver mit einem Schmelzbereich von 98—106° C, einer Glasumwandlungstemperatur (DTA) von 63—80° C, und es besitzt eine Aufspalttemperatur von ca. 120° C.

2b. Klarlack

Der im Beispiel 1c beschriebene hydroxylgruppenhaltige Polyester wurde mit dem in Beispiel 2a beschriebenen Vernetzer in äquivalenter Menge gemischt und so wie in Beispiel 1d weiterverarbeitet. Die Homogenisierung erfolgte jedoch bei Temperaturen zwischen 90 und 110° C.

Rezeptur: 100 Gew.-Teile Polyester entsprechend 1c
46,3 Gew.-Teile verkapptes Isocyanat gemäß 2a
0,74 Gew.-Teile Siliconöl OL

| Einbrenn-bedingungen | Mechanische Daten | | | | | |
|---|---|---|---|---|---|---|
| Zeit/Temperatur | SD | HK | HB | ET | GS | KS indirekt |
| 20′ 170 | 30–50 | 170 | 111 | 8 | 0 | 80,5 |

Beispiel 3

3a. Blockiertes Isocyanat

Zu 556 Gew.-Teilen des in Beispiel 1a beschriebenen IPDI/Diäthylenglykol-Addukts wurden bei 100°C 320 Gew.-Teile 2-Phenyl-4-methyl-imidazolin so zugegeben, daß die Temperatur des Reaktionsgemisches nicht über 110°C anstieg. Zur Vervollständigung der Reaktion wurde das Reaktionsgemisch noch 2 h bei 110°C erhitzt. Das Reaktionsprodukt ist ein weißes Pulver mit einem Schmelzbereich von 95—100°C, einer Glasumwandlungstemperatur (DTA) von 60—85°C, und es besitzt eine Aufspalttemperatur von ca. 150° C. Im Reaktionsprodukt konnte kein NCO mehr nachgewiesen werden.

3b. Klarlack

Der im Beispiel 1c beschriebene Polyester wurde mit dem Vernetzer aus 3a in äquivalenter Menge gemischt und so wie in Beispiel 1c weiterverarbeitet.

Rezeptur: 100 Gew.-Teile Polyester entsprechend 1c
78,3 Gew.-Teile verkapptes Isocyanat aus 3a
0,74 Gew.-Teile Siliconöl OL

| Einbrenn-bedingungen | Mechanische Daten | | | | | |
|---|---|---|---|---|---|---|
| Zeit/Temperatur | SD | HK | HB | ET | GS | KS indirekt |
| 15′ 180 | 40–50 | 180 | 110 | 10,2 | 0 | >94 |

## Beispiel 4

4a. Blockierte Isocyanatkomponente

Zu 556 Gew.-Teilen des in Beispiel 1a beschriebenen Addukts aus 2 Molen IPDI und 1 Mol Diäthylenglykol wurden bei 100°C 196 Gew.-Teile 2,4-Dimethylimidazolin so zugetropft, daß die Temperatur nicht über 110°C anstieg. Nach erfolgter 2,4-Dimethylimidazolin-Zugabe wurde das Reaktionsgemisch noch weitere 2 h bei 110°C erhitzt. In dem so hergestellten Reaktionsprodukt konnte kein NCO mehr nachgewiesen werden. Das Reaktionsprodukt ist ein farbloses Pulver mit einem Schmelzbereich von 100–107°C, einer Glasumwandlungstemperatur (DTA) von 60–95°C, und es besitzt eine Aufspalttemperatur von ca. 170°C.

4b. Klarlack

Der in Beispiel 1c beschriebene Polyester wurde mit dem in Beispiel 4a beschriebenen Vernetzer in äquivalenter Menge gemischt und so, wie in Beispiel 1c beschrieben, weiterverarbeitet.

| Rezeptur: | | |
|---|---|---|
| | 100 Gew.-Teile | Polyester entsprechend 1c |
| | 67,2 Gew.-Teile | verkapptes Isocyanat aus 4a |
| | 0,74 Gew.-Teile | Siliconöl OL |

| Einbrenn-bedingungen | Mechanische Daten | | | | | |
|---|---|---|---|---|---|---|
| Zeit/Temperatur | SD | HK | HB | ET | GS | KS indirekt |
| 15′ 180 | 40–50 | 190 | 115 | 10,5 | 0 | >94 |

Die in den vorstehenden Tabellen benutzten Abkürzungen bedeuten:

| | | |
|---|---|---|
| SD: | Schichtdicke (in μm) | |
| HK: | Härte nach König (in sec) | (DIN 53 157) |
| HB: | Härte nach Buchholz | (DIN 53 153) |
| ET: | Tiefung nach Erichsen (in mm) | (DIN 53 156) |
| GS: | Gitterschnittprüfung | (DIN 53 151) |
| KS indirekt: | Kugelschlag indirekt (in cm · kg) | |

## Patentansprüche

1. Pulverförmige, hitzehärtbare Überzugsmittel mit hoher Lagerstabilität und einer Korngröße kleiner als 250 μm mit einem Maximum der Korngrößenverteilung zwischen 20 und 60 μm, auf der Grundlage von zwischen 40 und 120°C schmelzenden hydroxylgruppenhaltigen Polyestern, blockierten Polyisocyanaten und gegebenenfalls Katalysatoren, sowie üblichen Lackzusätzen, dadurch gekennzeichnet, daß die Überzugsmittel als blockierte Polyisocyanate mit Imidazolinen der allgemeinen Formel

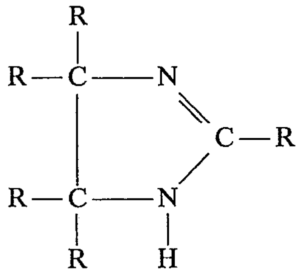

blockierte Polyisocyanate enthalten, worin R gleiche oder verschiedene Substituenten aus der Gruppe Wasserstoff, Alkyl-, Cycloalkyl-, Aralkyl- und gegebenenfalls alkylsubstituierter Arylrest sind, und wobei die hydroxylgruppenhaltigen Polyester und die blockierten Polyisocyanate in solchen Mengen enthalten sind, daß auf 1 Hydroxylgruppenäquivalent 0,9—1,1 NCO-Gruppenäquivalente kommen.

2. Pulverförmige Überzugsmittel nach Anspruch 1, dadurch gekennzeichnet, daß das mit Imidazolinen blockierte Polyisocyanat im Falle der Diisocyanate der allgemeinen Formel

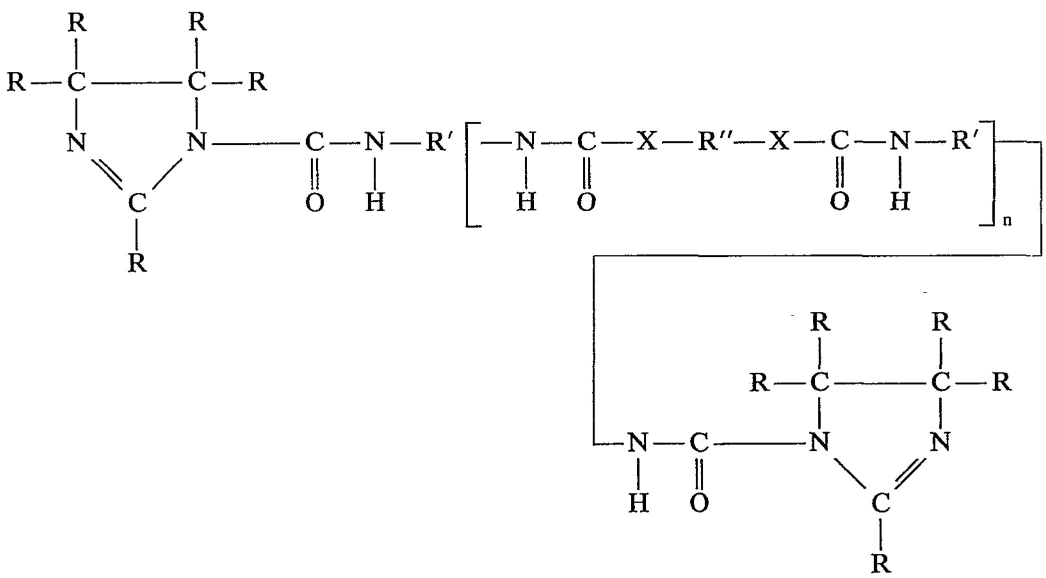

entspricht, worin n O oder 1, X O, S oder eine NH-Gruppe, R gleiche oder verschiedene Reste aus der Gruppe Wasserstoff, Alkyl-, Cycloalkyl-, Aralkyl- und ggf. alkylsubstituierter Arylrest, R' Alkylen-, Cycloalkylen- oder Arylenreste und R'' einen gegebenenfalls durch einen oder mehrere Alkylreste, wobei mehrere auch gemeinsamer Bestandteil eines cycloaliphatischen Ringes sein können, substituierten, gesättigten oder ungesättigten Alkylenrest mit 2—18 C-Atomen, der gegebenenfalls ein oder mehrere Sauerstoff- oder Schwefelatome in der Kohlenwasserstoffkette enthält, oder einen Cycloalkylenrest bedeuten.

3. Verfahren zur Herstellung der pulverförmigen Überzugsmittel gemäß Anspruch 1 oder 2, dadurch gekennzeichnet, daß man die festen hydroxylgruppenhaltigen Polyester und die blockierten Polyisocyanate, gegebenenfalls nach Zugabe der Lackzusätze, in den angegebenen Mischungsverhältnissen zunächst mischt und bei erhöhter Temperatur, bei der Polyester und blockiertes Polyisocyanat geschmolzen vorliegen, aber mindestens 30°C unterhalb der Aufspalttemperatur des blockierten Polyisocyanats extrudiert, abkühlt und anschließend auf eine Korngröße kleiner als 250 µm, vorzugsweise <100 µm, und ein Maximum der Korngrößenverteilung zwischen 20 und 60 µm, vorzugsweise zwischen 30 und 50 µm, mahlt und gegebenenfalls die gröbere Fraktion durch Siebung entfernt.

4. Verfahren zur Herstellung von Überzügen auf der Basis von Pulverlacken durch Umsetzung von feinteiligen Gemischen von zwischen 40 und 120°C schmelzenden hydroxylgruppenhaltigen Polyestern, blockierten Polyisocyanaten als Härtungsmittel und gegebenenfalls Katalysatoren sowie den üblichen Lackzusätzen nach Aufbringung auf das Substrat mittels bekannten Methoden durch Härtung bei erhöhter Temperatur, dadurch gekennzeichnet, daß man als blockierte Polyisocyanate mit Imidazolinen der allgemeinen Formel

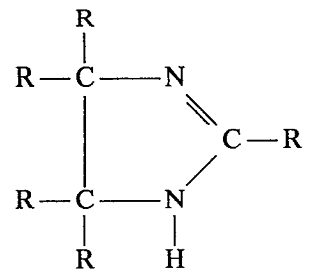

blockierte Polyisocyanate verwendet, worin R gleiche oder verschiedene Substituenten aus der Gruppe Wasserstoff, Alkyl-, Cycloalkyl-, Aralkyl- und gegebenenfalls alkylsubstituierter Arylrest sind, und die Härtung bei Temperaturen zwischen 140 und 200° C durchführt.

5. Verfahren nach Anspruch 4, dadurch gekennzeichnet, daß man die Härtung bei 150–180° C durchführt.

**Claims**

1. Powdered, heat-hardenable coating products with high storage stability and a grain size, smaller than 250 μm, with a maximum of the grain size distribution between 20 and 60 μm, based upon hydroxyl-groupcontaining polyesters with melting points between 40 and 120° C, blocked polyisocyanates and, if necessary, catalysts as well as usual lacquer additives characterised in that the coating products contain as blocked polyisocyanates, polyisocyanates blocked with imidazolines of the general formula

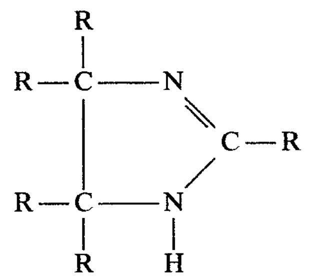

wherein R mean equal or different substituents selected from the group hydrogen, alkyl-, cycloalkyl-, aralkyl- and, if necessary, alkylsubstituted aryl radicals, and whereby the hydroxyl-group containing polyesters and the blocked polyisocyanates are contained in such amounts, that 0.9 to 1.1 NCO-group equivalents react with one hydroxyl group equivalent.

2. Powdered coating products according to Claim 1, characterised in that the polyisocyanate blocked with imidazolines corresponds, in case of the diisocyanate, to the general formula

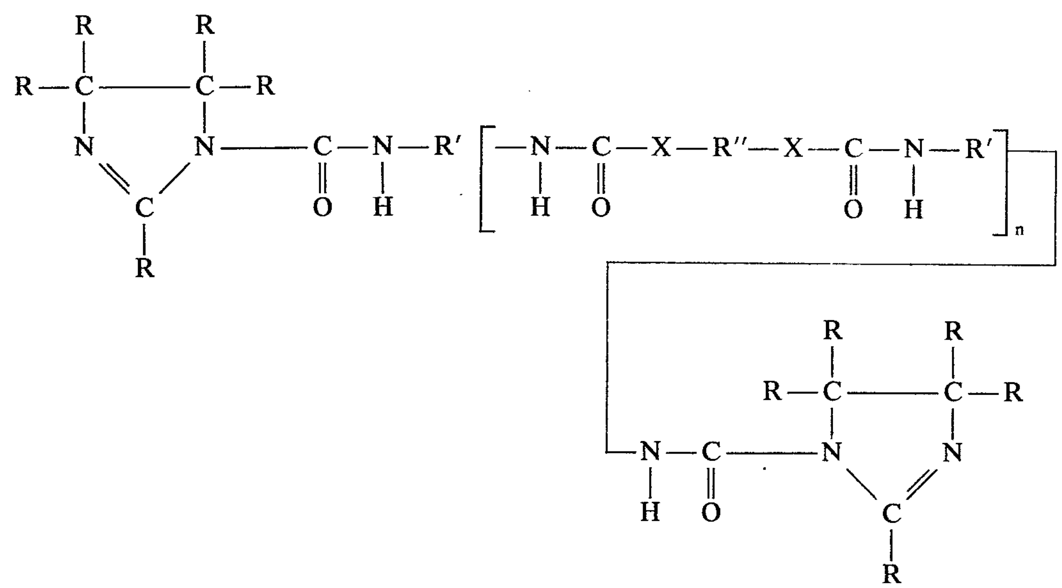

wherein n = 0 or 1, X = O, S or an NH-group, R = equal or different radicals selected from the group of hydrogen, alkyl-, cycloalkyl-, aralkyl-, and, if necessary, alkylsubstituted aryl radical, R′ = alkylene-, cycloalkylene- or arylene-radicals, and R″ = if necessary, by one or several alkyl radicals, whereby more than one also can be joint component of a cycloaliphatic ring, substituted, saturated or unsatured alkylene radical with 2 to 18 C-atoms, which possibly contains one or several oxygen- or sulfur-atoms in the hydrocarbon chain, or a cycloalkylene radical.

3. Process for the production of powdered coating products according to Claims 1 or 2, characterised in that first the solid hydroxyl-group-containing polyesters and the blocked polyisocyanates, if necessary after addition of the lacquer additives, are mixed in the stated conditions, extruded at elevated temperature at which the polyester and blocked polyisocyanate are in molten condition, but at least 30° C below the dissociation temperature of the blocked polyisocyanate, then cooled and subsequently milled to a grain size smaller than 250 μm, preferably 100 μm, and a maximum of the grain size distribution between 20 and 60 μm, preferably between 30 and 50 μm, and, if necessary, the coarser fraction is then removed by screening.

4. Process for the production of coatings on the basis of powdered lacquers by reaction of finely divided mixtures of hydroxyl-group-containing polyesters with a melting point between 40 and 120° C, blocked polyisocyanates as hardener and, if necessary, after application on the substrate according to known methods by means of hardening at elevated temperature, characterised in that polyisocyanates, blocked with imidazolines of the general formula

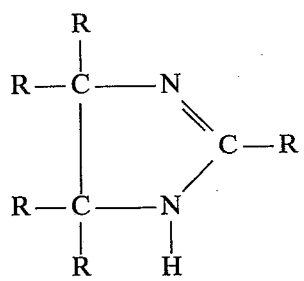

are used as blocked polyisocyanates, wherein R are equal or different substituents from the group hydrogen, alkyl-, cycloalkyl-, aralkyl-, and, if necessary, alkylsubstituted aryl radical, and hardening is carried out at temperatures between 140 and 200° C.

5. Process according to Claim 4, characterised in that hardening is carries out at 150 to 180° C.

**Revendications**

1. Produits de revêtement en poudre et durcissables à chaud, ayant une stabilité élevée à l'entreposage et une granulométrie inférieure à 250 μm avec un maximum de la distribution des dimensions de grain entre 20 et 60 μm, à base de polyesters contenant des groupes hydroxyle fondant entre 40 et 120° C, de polyisocyanates bloqués et éventuellement de catalyseurs de même que d'additifs usuels pour vernis, caractérisés en ce que les produits de revêtement contiennent comme polyisocyanates bloqués des polyisocyanates bloqués avec des imidazolines de formule générale:

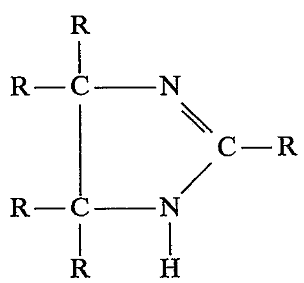

dans laquelle les R sont des substituants identiques ou différents, du groupe hydrogène, radical alcoyle, cycloalcoyle, aralcoyle et aryle éventuellement alcoyl-substitué, les polyesters contenant des groupes hydroxyle et les polyisocyanates bloqués étant contenus en des quantités telles que pour un équivalent de groupe hydroxyle il y ait 0,9 à 1,1 équivalent de groupe NCO.

2. Produits de revêtement en poudre selon la revendication 1, caractérisés en ce que le polyisocyanate bloqué avec des imidazolines correspond, dans le cas des diisocyanates, à la formule générale:

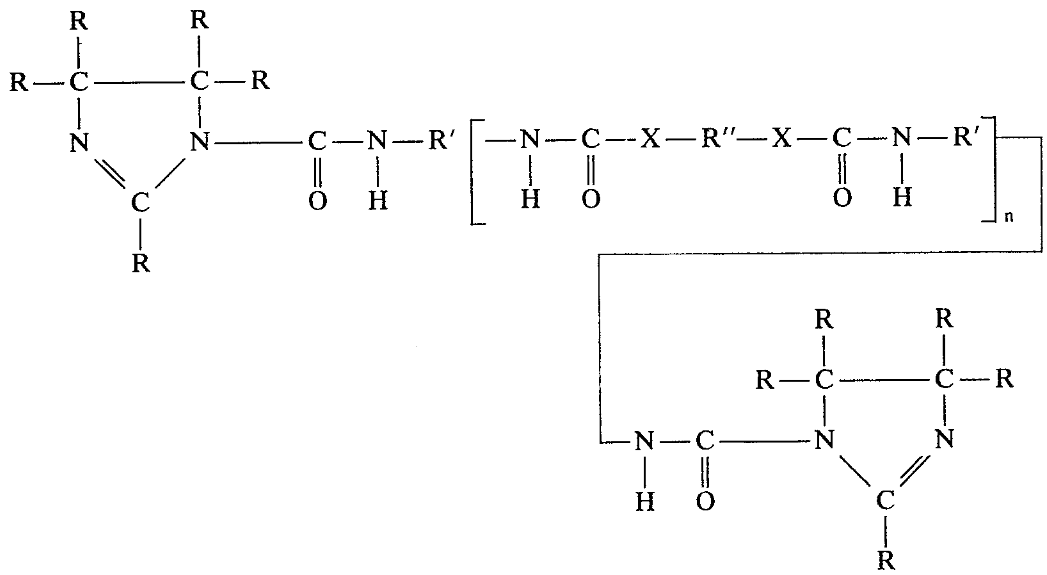

dans laquelle n est 0 ou 1, X est O, S ou un groupe NH, les R sont des radicaux identiques ou différents du groupe hydrogène, radical alcoyle, cycloalcoyle, aralcoyle et aryle éventuellement alcoyl-substitué, les R′ sont des radicaux alcoylène, cycloalcoylène ou arylène et R″ représente un radical alcoylène ayant 2 à 18 atomes de carbone, saturé ou non saturé, éventuellement substitué par un ou plusieurs radicaux alcoyle dont plusieurs peuvent aussi appartenir ensemble à un noyau cycloaliphatique et qui contient éventuellement un ou plusieurs atomes d'oxygène ou de soufre dans la chaîne hydrocarbonée, ou bien il représente un radical cycloalcoylène.

3. Procédé de préparation des produits de revêtement en poudre selon la revendication 1 ou 2, caractérisé en ce qu'on mélange tout d'abord les polyesters contenant des groupes hydroxyle solides et les polyisocyanates bloqués, éventuellement après addition des additifs pour vernis, dans les proportions de mélange indiquées, en ce qu'on extrude à une température élevée à laquelle le polyester et le polyisocyanate bloqué se présentent à l'état fondu mais qui est inférieure au moins de 30°C à la température de clivage du polyisocyanate bloqué, on refroidit et on broie ensuite à une granulométrie inférieure à 250 µm, de préférence inférieure à 100 µm, et avec un maximum de distribution des dimensions de grain entre 20 et 60 µm, de préférence entre 30 et 50 µm, et en ce qu'éventuellement on élimine la fraction plus grossière par tamisage.

4. Procédé de préparation de revêtements à base de vernis en poudre par réaction de mélanges finement divisés de polyesters contenant des groupes hydroxyle fondant entre 40 et 120°C, de polyisocyanates bloqués comme durcissants et éventuellement de catalyseurs ainsi que d'additifs usuels pour vernis après l'application sur le substrat au moyen de méthodes connues par durcissement à température élevée, caractérisé en ce qu'on utilise comme polyisocyanates bloqués des polyisocyanates bloqués avec des imidazolines de formule générale:

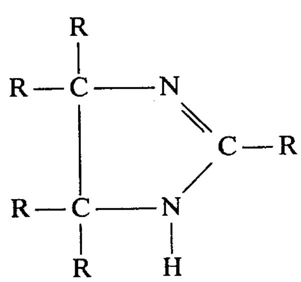

dans laquelle les R sont des substituants identiques ou différents du groupe hydrogène, radical alcoyle, cycloalcoyle, aralcoyle et aryle éventuellement alcoyl-substitué et en ce que le durcissement est exécuté à des températures entre 140 et 200°C.

5. Procédé selon la revendication 4, caractérisé en ce que le durcissement est exécuté à 150 – 180°C.